# FASCICULE DE BREVET EUROPEEN

(11) **EP 1 095 840 B1**
(45) Date de publication et mention de la délivrance du brevet: **03.01.2007**
(21) Numéro de dépôt: 00402860.1
(22) Date de dépôt: 16.10.2000
(51) Int. Cl.: B62D 1/06, B27D 1/08

(54) **Volant de direction pour véhicule et son procédé de fabrication**
Kraftfahrzeuglenkrad und Verfahren zu seiner Herstellung
Steering wheel for motor vehicle and method for its manufacture

(30) Priorité: 27.10.1999 FR 9913445
(43) Date de publication de la demande: 02.05.2001
(73) Titulaire: AUTOLIV DEVELOPMENT AB, 107 24 Stockholm (SE)
(72) Inventeur: Geron, Jean, 86190 Chire en Montreuil (FR)
(74) Mandataire: Santarelli

(56) Documents cités:
- EP-A- 1 029 771
- EP-A- 1 069 023
- DE-A- 19 848 604
- US-A- 5 792 302

## Description

L'invention a trait aux volants de direction pour véhicule qui comportent une jante formée par une armature, par un enrobage de cette armature et par un revêtement recouvrant cet enrobage.

On sait qu'il existe de tels volants, en général prévus pour des véhicules haut de gamme, dont le revêtement qui recouvre l'enrobage comporte une coque rigide en bois ou en matière plastique recouverte extérieurement d'une couche d'enjolivement en bois, en textile ou en papier, cette coque rigide étant généralement formée de deux éléments ayant chacun une section semi-circulaire qui sont collés sur l'enrobage réalisé en mousse de polyuréthane relativement souple, chaque élément de coque ayant ses deux tranches qui sont chacune jointives avec une tranche respective de l'autre élément de coque.

La fabrication de ces volants est relativement délicate, en particulier à cause des tolérances de fabrication de l'enrobage, qui sont relativement élevées en raison du fait qu'il se produit parfois un gonflement de la mousse de polyuréthane après démoulage, ce dont il résulte qui n'est pas toujours possible de rendre jointives les tranches des coques, l'écart existant alors entre ces dernières étant particulièrement défavorable sur le plan esthétique.

Le document US-A-5 792 302 propose de mouler l'enrobage à l'intérieur de la coque rigide en bois.

EP-A-1 029 771, qui fait partie de l'état de la technique au sens de l'article 54(3) CBE, propose de munir l'enrobage, préalablement à la mise en place de la coque rigide, de profilés latéraux adaptés à servir de support de fixation pour les deux demi-coques.

L'invention vise à fournir un volant du type dans lequel la coque rigide est mise en place sur l'enrobage, avec cette mise en place qui peut s'effectuer de façon simple et commode.

Elle propose à cet effet, sous un premier aspect, un volant de direction pour véhicule, comportant une jante formée par une armature, par un enrobage de ladite armature et par un revêtement recouvrant ledit enrobage, ledit revêtement comportant une coque rigide formée d'au moins deux éléments complémentaires rapportés sur ledit enrobage ; caractérisé en ce que ledit enrobage comporte au moins une nervure longitudinale saillant radialement prise en sandwich entre une tranche d'un premier dit élément de coque et une tranche d'un deuxième dit élément de coque, en ce que la tranche de ladite nervure est à fleur de la surface externe du premier élément de coque et de la surface externe du deuxième élément de coque, et en ce que ledit enrobage, y compris ladite nervure, est surmoulé sur ladite armature.

Ainsi, dans le volant selon l'invention, et contrairement aux volants antérieurs de ce type, l'on ne cherche pas à rendre jointives les tranches des éléments de coque, mais au contraire l'on interpose entre au moins deux tranches opposées, une portion de l'enrobage spécialement conformée à cet effet, à savoir une nervure saillant radialement, qui forme une sorte de joint grâce auquel il est possible de rattraper les variations dimensionnelles dues aux tolérances de fabrication.

La présence de la nervure entre les tranches des éléments de coque peut être rendue particulièrement discrète du fait de l'agencement de sa tranche.

Selon des caractéristiques préférées, pour des raisons de simplicité et de commodité de fabrication ainsi que de qualité des résultats obtenus :
- ladite nervure est d'une épaisseur comprise entre 3 et 5 mm ; et/ou
- ladite nervure est d'épaisseur constante.

Selon d'autres caractéristiques préférées, ledit enrobage est en une matière adaptée à présenter une surface relativement lisse après enlèvement d'une épaisseur prédéterminée.

Il est ainsi possible de réaliser l'enrobage avec une nervure ayant une hauteur plus importante que l'épaisseur des éléments de coque puis, après mise en place des éléments de coque, d'enlever la portion de nervure en saillie au-delà de la surface externe des éléments de coques tout en rendant possible que la nouvelle tranche de la nervure ainsi créée soit lisse, et non irrégulière comme cela serait par exemple le cas si l'enrobage était réalisé avec la même matière que les volants antérieurs sus-mentionnés, c'est-à-dire en mousse de polyuréthane relativement souple.

Selon d'autres caractéristiques préférées, ledit enrobage est en mousse de polyuréthane relativement rigide.

Ce type de mousse de polyuréthane, qui est par exemple utilisé sous forme de bloc par les fleuristes au fond d'un vase pour y piquer des fleurs, convient particulièrement bien pour mettre en oeuvre l'invention.

En effet, ce type de matière est capable de présenter une surface relativement lisse après enlèvement d'une certaine épaisseur, ce qui permet, ainsi qu'on vient de l'expliquer, de mouler l'enrobage avec une nervure ayant une hauteur supérieure à l'épaisseur des coques.

En outre, ce type de mousse présente un temps de moussage plus court que celui d'une mousse souple ce qui offre notamment l'avantage de permettre des cadences de fabrication plus élevées et/ou de réduire les tolérances de fabrication par diminution du risque de gonflement de la mousse par suite d'un démoulage légèrement prématuré.

Ce type de mousse présente également l'intérêt d'avoir une densité inférieure à la mousse souple classique, ce qui permet d'obtenir un volant plus léger et présentant une inertie et une fréquence propre réduites puisque l'allégement est en périphérie du volant.

Enfin, la mousse rigide présente au surplus l'avantage, par rapport à la mousse souple classique, d'être facile à travailler, ce qui permet notamment d'effectuer l'enlèvement de la portion de nervure en saillie au-delà des surfaces externes des éléments de coque, par simple ponçage, et permet également, lorsque le volant doit être recyclé, de séparer la mousse et l'armature par simple écrasement de la mousse.

Selon d'autres caractéristiques préférées, pour rendre aussi discrète que possible la présence de la nervure, celle-ci est teintée dans la masse ou peinte sur sa tranche pour être du même ton que la surface externe du premier élément de coque et la surface externe du deuxième élément de coque.

Selon d'autres caractéristiques préférées pour des raisons de simplicité et de commodité de réalisation, le volant selon l'invention comporte deux dites nervures longitudinales saillant radialement similaires, respectivement une première nervure prise en sandwich entre une première tranche dudit premier élément de coque et une première tranche dudit deuxième élément de coque, et une deuxième nervure prise en sandwich entre une deuxième tranche dudit premier élément de coque et une deuxième tranche dudit deuxième élément de coque.

Selon les circonstances, et en particulier l'effet visuel recherché pour le volant :
- ladite coque est présente sur la totalité de la jante ; et alternativement
- ladite coque n'est présente que sur une portion de la jante.

Selon des caractéristiques préférées dans ce dernier cas, le revêtement comporte, pour recouvrir ledit enrobage là où il n'est pas recouvert par la coque, un gainage en cuir ou analogue.

Selon d'autres caractéristiques préférées, notamment pour des raisons de qualité d'aspect et de durabilité, la surface externe de ladite coque et la tranche de chaque dite nervure sont revêtues d'une pellicule de protection telle qu'une couche de vernis.

L'invention vise également, sous un deuxième aspect, un procédé de fabrication d'un volant de direction pour véhicule, comportant :
- l'étape de préparer une armature comportant une portion de jante ;
- l'étape de surmouler un enrobage sur ladite portion de jante ; et
- l'étape de recouvrir ledit enrobage avec un revêtement comportant une coque rigide formée d'au moins deux éléments complémentaires rapportés sur ledit enrobage ;
caractérisé en ce que, pour obtenir un volant tel qu'exposé ci-dessus :
- ladite étape de surmouler un enrobage sur la portion de jante comporte l'utilisation d'un moule adapté à l'obtention d'un enrobage comportant au moins une nervure longitudinale saillant radialement sur une hauteur prédéterminée ; et
- ladite étape de recouvrir l'enrobage comporte l'étape de rapporter au moins un premier dit élément de coque et un deuxième dit élément de coque sur ledit enrobage en prenant en sandwich ladite nervure entre une tranche dudit premier élément de coque et une tranche dudit deuxième élément de coque, avec lesdits premier élément de coque et deuxième élément de coque qui ont une épaisseur inférieure à la hauteur de chaque nervure, et avec ladite étape de recouvrir l'enrobage qui comporte, après l'étape de rapporter le premier élément de coque et le deuxième élément de coque, l'étape d'enlever la portion de chaque nervure qui se trouve en saillie au-delà de la surface externe du premier élément de coque et du deuxième élément de coque de sorte que la tranche de chaque nervure soit alors à fleur de ces surfaces externes.

Selon des caractéristiques préférées, pour des raisons de simplicité et de commodité, ledit moule utilisé dans ladite étape de surmouler un enrobage est adapté à l'obtention de deux dites nervures longitudinales saillant radialement similaires ; et dans ladite étape de rapporter au moins un premier élément de coque et un deuxième élément de coque sur ledit enrobage, une première dite nervure est prise en sandwich entre une première tranche dudit premier élément de coque et une première tranche dudit deuxième élément de coque tandis qu'une deuxième dite nervure est prise en sandwich entre une deuxième tranche dudit premier élément de coque et une deuxième tranche dudit deuxième élément de coque.

Selon d'autres caractéristiques préférées, chaque dite nervure est réalisée suivant le plan de fermeture dudit moule.

La réalisation des nervures ne présente ainsi aucune difficulté de moulage.

En outre, la bavure qui existe toujours en périphérie de la pièce moulée au niveau de la fermeture du moule se trouve ainsi sur la tranche de la nervure telle qu'elle est moulée.

Cela offre l'avantage d'éviter que cette bavure ne cause des difficultés de mise en place des éléments de coque.

La nervure étant moulée avec une hauteur supérieure à l'épaisseur des éléments de coque, cette bavure disparaît lorsque l'on enlève la partie de la nervure qui est en saillie au-delà de la surface externe des éléments de coque.

L'exposé de l'invention sera maintenant poursuivi par la description d'exemples de réalisation, donnés ci-après à titre illustratif et non limitatif, en référence aux dessins annexés. Sur ceux-ci :
- la figure 1 est une vue en plan d'un volant conforme à l'invention en cours de fabrication, ne comportant que l'armature et l'enrobage de la jante ;
- la figure 2 est une vue en élévation-coupe repérée par II-II sur la figure 1 ;
- les figures 3 à 6 sont des vues en élévation-coupe similaires à la figure 2, illustrant les étapes successives de réalisation du volant ;
- la figure 7 est une vue similaire à la figure 1, pour une variante du volant dans laquelle la coque ne doit être présente que sur une portion de la jante ; et
- la figure 8 est une vue en élévation-coupe prise suivant le plan repéré par VIII-VIII sur la figure 7, une fois que l'enrobage situé à ce niveau a été recouvert par un gainage en cuir.

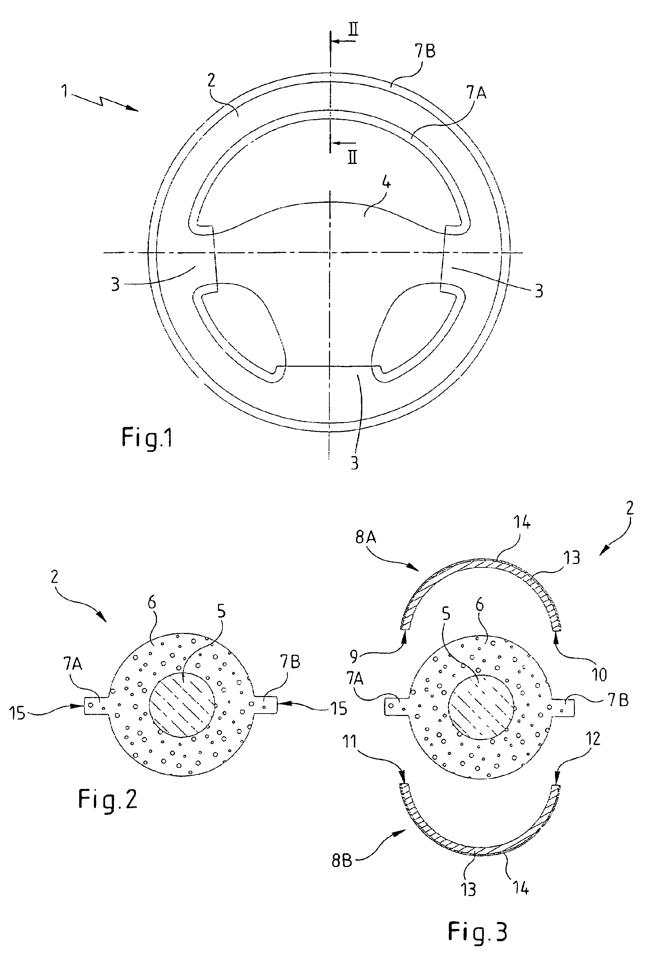

Le volant de direction 1 dont les étapes de fabrication sont illustrées sur les figures 1 à 6, comporte une jante 2 reliée, par trois courtes branches 3, à un moyeu central 4 prévu pour être muni d'un module airbag, seul le contour de l'armature métallique de ce moyeu étant illustré sur la figure 1.

Ainsi qu'on le voit sur les figures 2 à 6, la jante 2 comporte une armature métallique 5 à section circulaire noyée dans un enrobage 6 en mousse de polyuréthane rigide, du type de celui employé par les fleuristes en fond de vase pour piquer des fleurs, l'enrobage 6 ayant une surface externe ayant en section une forme générale circulaire tandis qu'elle présente, dans un même plan diamétral, deux nervures opposées 7A et 7B saillant radialement, les nervures 7A et 7B ayant dans l'exemple illustré une épaisseur, constante sur toute leur hauteur, d'environ 4 mm.

La nervure 7A, située du côté interne, s'étend le long de la jante 2 sur chaque espace situé entre deux branches 3 successives ainsi que sur ces branches sur lesquelles se poursuit l'enrobage 6, alors que l'enrobage 7B, situé du côté externe, s'étend sans interruption sur toute la périphérie de la jante 2.

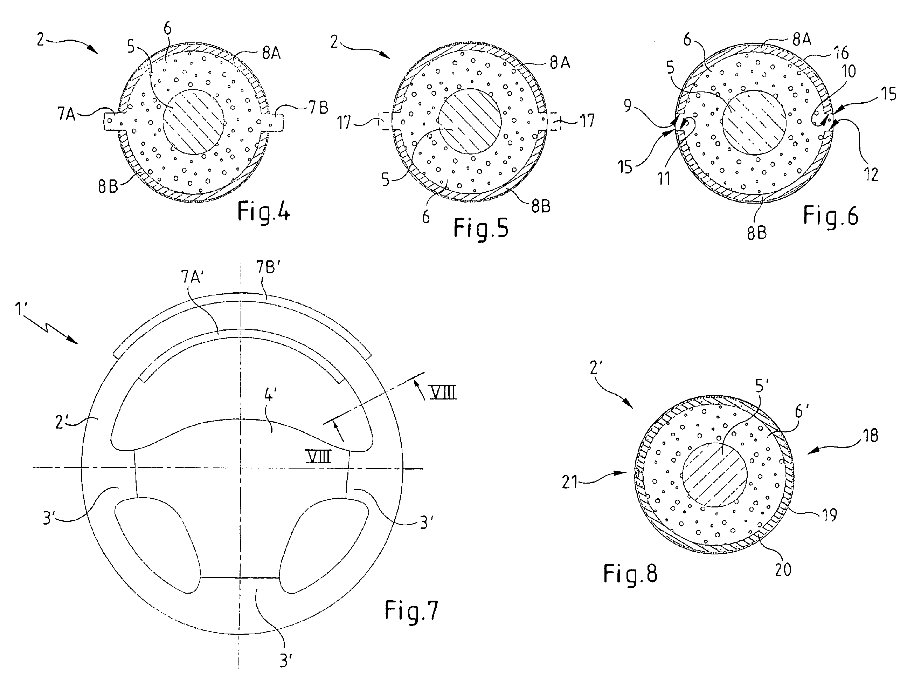

Lorsque la fabrication de la jante du volant 1 est achevée (figure 6), l'enrobage 6 est recouvert d'une coque rigide formée par deux éléments à section semi-circulaire 8A et 8B qui sont rapportés par collage de leur surface interne sur la surface externe de l'enrobage 6, ces surfaces internes et externes ayant le même diamètre.

Chacune des coques 8A et 8B présente (voir figure 3) un corps 13 en matière plastique thermoformée recouvert extérieurement d'une feuille décorative 14, ici en bois.

Les tranches 9 et 10 de l'élément 8A ainsi que les tranches 11 et 12 de l'élément 8B sont conformées de sorte que la nervure 7A est prise en sandwich entre les tranches 9 et 11 tandis que la nervure 7B est prise en sandwich entre les tranches 10 et 12.

L'enrobage 6 est teinté dans la masse dans le même ton que la feuille décorative 14 et, à l'état fini (figure 6), la tranche 15 de chacune des nervures 7A et 7B est à fleur de ces surfaces externes, ces dernières ainsi que les tranches 15 étant revêtues d'une pellicule de vernis 16 pour les protéger.

On va maintenant expliquer comment l'on procède pour fabriquer le volant 1.

Après avoir préparé l'armature métallique, on place dans un moule sa portion 5, ainsi que la portion correspondant aux branches 3, pour surmouler l'enrobage 6 sur ces portions, ce moule étant tel que les nervures 7A et 7B sont situées au niveau de son plan de fermeture, et plus précisément centrées sur ce plan, de sorte que c'est sur la tranche 15 des nervures 7A et 7B que se trouve la bavure (non illustrée) de fermeture de moule.

On rapporte ensuite les éléments de coque 8A et 8B sur l'enrobage 6, ainsi que montré sur les figures 3 et 4, en effectuant la liaison, ainsi qu'expliqué ci-dessus, par collage.

On observera (voir en particulier la figure 4) que les nervures 7A et 7B ont été moulées avec une hauteur supérieure à l'épaisseur des éléments de coque 8A et 8B de sorte que ces nervures présentent chacune une portion 17, montrée en trait interrompu sur la figure 5, qui est en saillie par rapport à la surface externe des coques 8A et 8B.

Pour enlever les portions 17, il suffit de réaliser un simple ponçage, la mousse de polyuréthane rigide avec laquelle l'enrobage 6 est formé étant relativement friable et se laissant donc poncer très facilement.

La surface externe des éléments de coque 8A et 8B, qui est relativement dure, sert avantageusement de guidage pour la finition de cette opération de ponçage, afin d'obtenir, comme expliqué précédemment, qu'après enlèvement des parties 17, les tranches 15 des nervures 7A et 7B soient à fleur des surfaces externes des éléments 8A et 8B.

Les tranches 15, du fait que le grain de l'enrobage 6 est relativement fin, sont lisses et sont, du fait que l'enrobage 6 est teinté dans la masse, dans le même ton que les surfaces externes des éléments 8A et 8B. Il en résulte que la présence des tranches 15 au milieu de ces surfaces externes est très discrète.

La finition du revêtement de l'enrobage 6 se fait en appliquant la pellicule de vernis 16 sur les surfaces externes des coques 8A et 8B et sur les tranches 15.

Le volant 1' illustré sur les figures 7 et 8 est similaire au volant 1, si ce n'est que l'enrobage de l'armature de la jante n'est revêtu d'une coque rigide qu'en partie supérieure tandis que le reste de l'enrobage est prévu pour être revêtu par un gainage en cuir.

D'une façon générale, on a employé pour les éléments du volant 1' similaires à ceux du volant 1, les mêmes références numériques mais affectées d'un indice '.

Les rainures 7A' et 7B' (figure 7) ne sont plus précisément présentes qu'en partie supérieure de la jante 2', sur un secteur d'environ 98°, les coques correspondantes ayant bien entendu la même extension angulaire.

En-dehors de la partie recouverte par les coques rigides, l'enrobage 6' est revêtu, ainsi qu'on le voit sur la figure 8, par un gainage en cuir 18 comportant du côté externe une feuille 19 de cuir proprement dit en sous-face de laquelle se trouve une couche 20 de polyuréthane souple, le gainage 18 étant de façon classique rapporté sur l'enrobage 6 grâce à une couture 21 située du côté interne de la jante.

Dans des variantes non représentées, les nervures 7A et 7B sont remplacées par une seule nervure ou par davantage que deux nervures ; l'épaisseur de la ou des nervure(s) est différente de 4 mm et/ou est variable ; l'enrobage est dans une autre matière que du polyuréthane relativement rigide ; la tranche de la ou des nervure(s) est peinte dans le même ton que la surface externe des éléments de coque alors que l'enrobage n'est pas teint dans la masse ; la feuille décorative des coques est dans une matière autre que du bois, par exemple du textile ou du papier, voire du cuir ou du métal ; et/ou la pellicule 16 du vernis de protection est remplacée par un autre type de pellicule de protection.

De nombreuses autres variantes sont possibles en fonction des circonstances, et on rappelle à cet égard que l'invention ne se limite pas aux exemples décrits et représentés.

## Revendications

1. Volant de direction pour véhicule, comportant une jante formée par une armature, par un enrobage de ladite armature et par un revêtement recouvrant ledit enrobage, ledit revêtement comportant une coque rigide formée d'au moins deux éléments complémentaires rapportés sur ledit enrobage ; **caractérisé en ce que** ledit enrobage (6 ; 6') comporte au moins une nervure longitudinale saillant radialement (7A, 7B ; 7A', 7B') prise en sandwich entre une tranche (9, 10) d'un premier dit élément de coque (8A) et une tranche (11, 12) d'un deuxième dit élément de coque (8B), **en ce que** la tranche (15) de ladite nervure (7A, 7B ; 7A', 7B') est à fleur de la surface externe du premier élément de coque (8A) et de la surface externe du deuxième élément de coque (8B), et **en ce que** ledit enrobage, y compris ladite nervure (7A, 7B ; 7A', 7B'), est surmoulé sur ladite armature (5 ; 5').

2. Volant selon la revendication 1, **caractérisé en ce que** ladite nervure (7A, 7B ; 7A', 7B') est d'une épaisseur comprise entre 3 et 5 mm.

3. Volant selon l'une quelconque des revendications 1 ou 2, **caractérisé en ce que** ladite nervure (7A, 7B ; 7A', 7B') est d'épaisseur constante.

4. Volant selon l'une quelconque des revendications 1 à 3, **caractérisé en ce que** ledit enrobage (6 ; 6') est en une matière adaptée à présenter une surface relativement lisse après enlèvement d'une épaisseur prédéterminée.

5. Volant selon l'une quelconque des revendications 1 à 4, **caractérisé en ce que** ledit enrobage (6 ; 6') est en mousse de polyuréthane relativement rigide.

6. Volant selon l'une quelconque des revendications 1 à 5, **caractérisé en ce que** ladite nervure (7A, 7B ; 7A', 7B') est teintée dans la masse ou peinte sur sa tranche pour être du même ton que la surface externe du premier élément de coque (8A) et la surface externe du deuxième élément de coque (8B).

7. Volant selon l'une quelconque des revendications 1 à 6, **caractérisé en ce qu'**il comporte deux dites nervures saillant radialement similaires, respectivement une première nervure (7A ; 7A') prise en sandwich entre une première tranche (9) dudit premier élément de coque (8A) et une première tranche (11) dudit deuxième élément de coque (8B), et une deuxième nervure (78 ; 7B') prise en sandwich entre une deuxième tranche (10) dudit premier élément de coque (8A) et une deuxième tranche (12) dudit deuxième élément de coque (8B).

8. Volant selon l'une quelconque des revendications 1 à 7, **caractérisé en ce que** ladite coque (8A, 8B) est présente sur la totalité de la jante (2).

9. Volant selon l'une quelconque des revendications 1 à 7, **caractérisé en ce que** ladite coque n'est présente que sur une portion de la jante (2').

10. Volant selon la revendication 9, **caractérisé en ce que** ledit revêtement comporte, pour recouvrir ledit enrobage (6') là où il n'est pas recouvert par la coque, un gainage (18) en cuir ou analogue.

11. Volant selon l'une quelconque des revendications 1 à 10, **caractérisé en ce que** la surface externe de ladite coque (8A, 8B) et la tranche (15) de chaque dite nervure (7A, 7B ; 7A', 7B') sont revêtues d'une pellicule (16) de protection telle qu'une couche de vernis.

12. Procédé de fabrication d'un volant de direction pour véhicule, comportant :
- l'étape de préparer une armature comportant une portion de jante (5; 5') ;
- l'étape de surmouler un enrobage (6 ; 6') sur ladite portion de jante (5 ; 5') ; et
- l'étape de recouvrir ledit enrobage (6 ; 6') avec un revêtement comportant une coque rigide formée d'au moins deux éléments complémentaires rapportés sur ledit enrobage ;
**caractérisé en ce que**, pour obtenir un volant selon l'une quelconque des revendications 1 à 11 :
- ladite étape de surmouler un enrobage sur la portion de jante comporte l'utilisation d'un moule adapté à l'obtention d'un enrobage comportant au moins une nervure longitudinale saillant radialement (7A, 7B ; 7A', 7B') sur une hauteur prédéterminée ;
- ladite étape de recouvrir l'enrobage (6 ; 6') comporte l'étape de rapporter au moins un premier dit élément de coque (8A) et un deuxième dit élément de coque (8B) sur ledit enrobage (6 ; 6') en prenant en sandwich ladite nervure (7A, 7B ; 7A', 7B') entre une tranche (9,10) dudit premier élément de coque (8A) et une tranche (11, 12) dudit deuxième élément de coque (8B), avec lesdits premier élément de coque (8A) et deuxième élément de coque (8B) qui ont une épaisseur inférieure à la hauteur de chaque nervure (7A, 7B ; 7A', 7B'), et avec ladite étape de recouvrir l'enrobage qui comporte, après l'étape de rapporter le premier élément de coque et le deuxième élément de coque, l'étape d'enlever la portion (17) de chaque nervure qui se trouve en saillie au-delà de la surface externe du premier élément de coque (8A) et du deuxième élément de coque (8B) de sorte que la tranche (15) de chaque nervure (7A, 7B ; 7A', 7B') soit alors à fleur de ces surfaces externes.

13. Procédé selon la revendication 12, **caractérisé en ce que** ledit moule utilisé dans ladite étape de surmouler un enrobage est adapté à l'obtention de deux dites nervures saillant radialement similaires (7A, 7B ; 7A', 7B') ; et **en ce que** dans ladite étape de rapporter au moins un premier élément de coque et un deuxième élément de coque sur ledit enrobage, une première dite nervure (7A ; 7A') est prise en sandwich entre une première tranche (9) dudit premier élément de coque (8A) et une première tranche (11) dudit deuxième élément de coque (8B) tandis qu'une deuxième dite nervure (7B ; 7B') est prise en sandwich entre une deuxième tranche (10) dudit premier élément de coque (8A) et une deuxième tranche (12) dudit deuxième élément de coque (8B).

14. Procédé selon l'une quelconque des revendications 12 ou 13, **caractérisé en ce que** chaque dite nervure (7A, 7B ; 7A', 7B') est réalisée suivant le plan de fermeture dudit moule.

15. Procédé selon l'une quelconque des revendications 12 à 14 **caractérisé en ce que** chaque dite nervure (7A, 7B ; 7A', 7B') est d'une épaisseur comprise entre 3 et 5 mm.

16. Procédé selon l'une quelconque des revendications 12 à 15, **caractérisé en ce que** chaque dite nervure (7A, 7B ; 7A', 7B') est d'épaisseur constante.

17. Procédé selon l'une quelconque des revendications 12 à 16, **caractérisé en ce que** ledit enrobage (6 ; 6') est en une matière adaptée à présenter une surface relativement lisse après enlèvement d'une épaisseur prédéterminée.

18. Procédé selon l'une quelconque des revendications 12 à 17, **caractérisé en ce que** ledit enrobage (6 ; 6') est en mousse de polyuréthane relativement rigide.

## Claims

1. Vehicle steering wheel, including a rim formed by an armature, by a coating of said armature and by a cover covering said coating, said cover including a rigid shell formed of at least two complementary members attached to said coating; **characterised in that** said coating (6; 6') includes at least one radially projecting longitudinal rib (7A, 7B; 7A', 7B') sandwiched between an edge (9, 10) of a first (8A) of said shell members and an edge (11, 12) of a second (8B) of said shell members, **in that** the edge (15) of said rib (7A, 7B; 7A', 7B') is flush with the external surface of the first shell member (8A) and the external surface of the second shell member (8B), and **in that** said coating, including said rib (7A, 7B; 7A', 7B'), is moulded over said armature (5; 5').

2. Steering wheel according to claim 1, **characterised in that** said rib (7A, 7B; 7A', 7B') has a thickness from 3 to 5 mm.

3. Steering wheel according to either claim 1 or claim 2, **characterised in that** said rib (7A, 7B; 7A', 7B') is of constant thickness.

4. Steering wheel according to any one of claims 1 to 3, **characterised in that** said coating (6; 6') is of a material adapted to have a relatively smooth surface after removal of a predetermined thickness.

5. Steering wheel according to any one of claims 1 to 4, **characterised in that** said coating (6; 6') is of relatively rigid polyurethane foam.

6. Steering wheel according to any one of claims 1 to 5, **characterised in that** said rib (7A, 7B; 7A', 7B') is self-coloured or painted on its edge to be of the same tone as the external surface of the first shell member (8A) and the external surface of the second shell member (8B).

7. Steering wheel according to any one of claims 1 to 6, **characterised in that** it comprises two of said radially projecting ribs that are similar, respectively a first rib (7A; 7A') sandwiched between a first edge (9) of said first shell member (8A) and a first edge (11) of said second shell member (8B) and a second rib (7B; 7B') sandwiched between a second edge (10) of said first shell member (8A) and a second edge (12) of said second shell member (8B).

8. Steering wheel according to any one of claims 1 to 7, **characterised in that** said shell (8A, 8B) is present over the whole of the rim (2).

9. Steering wheel according to any one of claims 1 to 7, **characterised in that** said shell is present over only a portion of the rim (2').

10. Steering wheel according to claim 9, **characterised in that** said cover includes, to cover said coating (6') where it is not covered by the shell, a sheath (18) of leather or the like.

11. Steering wheel according to any one of claims 1 to 10, **characterised in that** the external surface of said shell (8A, 8B) and the edge (15) of each of said ribs (7A, 7B; 7A', 7B') are covered with a protective film (16) such as a layer of varnish.

12. Method of fabricating a vehicle steering wheel, including:
- the step of preparing an armature including a rim portion (5; 5');
- the step of moulding a coating (6; 6') over said rim portion (5, 5'); and
- the step of covering said coating (6; 6') with a cover including a rigid shell formed of at least two complementary members attached to said coating;
**characterised in that**, to obtain a steering wheel according to any one of claims 1 to 11:
- said step of moulding a cover over the rim portion includes the use of a mould adapted to produce a coating including at least one longitudinal rib (7A, 7B; 7A', 7B') projecting radially to a predetermined height;
- said step of covering the coating (6; 6') includes the step of attaching at least a first (8A) of said shell members and a second (8B) of said shell members to said cover (6; 6') with said rib (7A, 7B; 7A', 7B') sandwiched between an edge (9, 10) of said first shell member (8A) and an edge (11, 12) of said second shell member (8B), with said first shell member (8A) and said second shell member (8B) which have a thickness less than the height of each rib (7A, 7B; 7A', 7B'), and with said step of covering the coating which includes, after the step of attaching the first shell member and the second shell member, the step of removing the portion (17) of each rib that projects beyond the external surface of the first shell member (8A) and the second shell member (8B) so that the edge (15) of each rib (7A, 7B; 7A', 7B') is then flush with those external surfaces.

13. Method according to claim 12, **characterised in that** said mould used in said step of overmoulding a coating is adapted to produce two of said radially projecting ribs (7A, 7B; 7A', 7B') that are similar; and **in that** in said step of attaching at least one first shell member and one second shell member to said coating a first (7A, 7A') of said ribs is sandwiched between a first edge (9) of said first shell member (8A) and a first edge (11) of said second shell member (8B) whereas a second (7B; 7B') of said ribs is sandwiched between a second edge (10) of said first shell member (8A) and a second edge (12) of said second shell member (8B).

14. Method according to either claim 12 or claim 13, **characterised in that** each of said ribs (7A, 7B; 7A', 7B') is produced in the closure plane of said mould.

15. Method according to any one of claims 12 to 14 **characterised in that** each of said ribs (7A, 7B; 7A', 7B') has a thickness from 3 to 5 mm.

16. Method according to any one of claims 12 to 15, **characterised in that** each of said ribs (7A, 7B; 7A', 7B') is of constant thickness.

17. Method according to any one of claims 12 to 16, **characterised in that** said coating (6; 6') is of a material adapted to have a relatively smooth surface after removing a predetermined thickness.

18. Method according to any one of claims 12 to 17, **characterised in that** said coating (6; 6') is of relatively rigid polyurethane foam.

## Patentansprüche

1. Lenkrad für Kraftfahrzeug, mit einem Kranz, der durch einen Träger, durch eine Ummantelung des Trägers und durch eine die Ummantelung bedeckende Abdeckung gebildet ist, wobei die Abdeckung eine starre Schale aufweist, die aus wenigstens zwei komplementären Elementen gebildet ist, die auf die Ummantelung aufgesteckt sind; **dadurch gekennzeichnet, dass** die Ummantelung (6; 6') wenigstens einen radial vorstehenden longitudinalen Steg (7A, 7B; 7A', 7B') aufweist, der zwischen einer Schnittfläche (9, 10) eines ersten so genannten Schalenelements (8A) und einer Schnittfläche (11, 12) eines zweiten so genannten Schalenelements (8B) sandwichartig angeordnet ist, dass die Schnittfläche (15) des Stegs (7A, 7B; 7A', 7B') mit der äußeren Oberfläche des ersten Schalenelements (8A) und mit der äußeren Oberfläche des zweiten Schalenelements (8B) bündig ist und dass die Ummantelung einschließlich des Stegs (7A, 7B; 7A', 7B') auf den Träger (5; 5') aufgegossen ist.

2. Lenkrad nach Anspruch 1, **dadurch gekennzeichnet, dass** der Steg (7A, 7B; 7A', 7B') eine Dicke im Bereich von 3 bis 5 mm hat.

3. Lenkrad nach einem der Ansprüche 1 oder 2, **dadurch gekennzeichnet, dass** der Steg (7A, 7B; 7A', 7B') eine konstante Dicke hat.

4. Lenkrad nach einem der Ansprüche 1 bis 3, **dadurch gekennzeichnet, dass** die Ummantelung (6; 6') aus einem Material besteht, das so beschaffen ist, dass es nach dem Abtragen einer vorgegebenen Dicke eine verhältnismäßig glatte Oberfläche aufweist.

5. Lenkrad nach einem der Ansprüche 1 bis 4, **dadurch gekennzeichnet, dass** die Ummantelung (6; 6') aus einem verhältnismäßig starren Polyurethanschaum besteht.

6. Lenkrad nach einem der Ansprüche 1 bis 5, **dadurch gekennzeichnet, dass** der Steg (7A, 7B; 7A', 7B') durchgefärbt ist oder an seiner Schnittfläche gestrichen ist, damit er den gleichen Farbton wie die äußere Oberfläche des ersten Schalenelements (8A) und die äußere Oberfläche des zweiten Schalenelements (8B) hat.

7. Lenkrad nach einem der Ansprüche 1 bis 6, **dadurch gekennzeichnet, dass** es zwei radial vorstehende Stege aufweist, nämlich einen ersten Steg (7A; 7A'), der zwischen einer ersten Schnittfläche (9) des ersten Schalenelements (8A) und einer ersten Schnittfläche (11) des zweiten Schalenelements (8B) sandwichartig angeordnet ist, und einen zweiten Steg (7B; 7B'), der zwischen einer zweiten Schnittfläche (10) des ersten Schalenelements (8A) und einer zweiten Schnittfläche (12) des zweiten Schalenelements (8B) sandwichartig angeordnet ist.

8. Lenkrad nach einem der Ansprüche 1 bis 7, **dadurch gekennzeichnet, dass** die Schale (8A, 8B) auf dem gesamten Kranz (2) vorhanden ist.

9. Lenkrad nach einem der Ansprüche 1 bis 7, **dadurch gekennzeichnet, dass** die Schale nur auf einem Teil des Kranzes (2') vorhanden ist.

10. Lenkrad nach Anspruch 9, **dadurch gekennzeichnet, dass** die Abdeckung, um die Ummantelung (6') dort, wo sie nicht durch die Schale bedeckt ist, abzudecken, eine Hülle (18) aus Kupfer oder dergleichen aufweist.

11. Lenkrad nach einem der Ansprüche 1 bis 10, **dadurch gekennzeichnet, dass** die äußere Oberfläche der Schale (8A, 8B) und die Schnittfläche (15) jedes Stegs (7A, 7B; 7A', 7B') mit einer Schutzhaut (16) wie etwa einer Lackschicht überzogen ist.

12. Verfahren zum Herstellen eines Lenkrades für ein Fahrzeug, das umfasst:
- einen Schritt zum Vorbereiten eines Trägers, der einen Kranzabschnitt (5; 5') aufweist;
- einen Schritt des Aufgießens einer Ummantelung (6; 6') auf den Kranzabschnitt (5; 5'); und
- einen Schritt des Bedeckens der Ummantelung (6; 6') mit einer Abdeckung, die eine starre Schale umfasst, die aus wenigstens zwei komplementären Elementen gebildet ist, die auf die Ummantelung aufgesteckt sind;
**dadurch gekennzeichnet, dass**, um ein Lenkrad nach einem der Ansprüche 1 bis 11 zu erhalten:
- der Schritt des Aufgießens einer Ummantelung auf den Kranzabschnitt das Verwenden einer Form umfasst, die so beschaffen ist, dass eine Ummantelung erhalten wird, die wenigstens einen radial vorstehenden longitudinalen Steg (7A, 7B; 7A', 7B') mit einer vorgegebenen Höhe aufweist;
- der Schritt des Beschichtens der Ummantelung (6; 6') den Schritt des Aufsteckens wenigstens eines ersten Schalenelements (8A) und eines zweiten Schalenelements (8B) auf die Ummantelung (6; 6') umfasst, wobei der Steg (7A, 7B; 7A', 7B') zwischen einer Schnittfläche (9, 10) des ersten Schalenelements (8A) und einer Schnittfläche (11, 12) des zweiten Schalenelements (8B) sandwichartig aufgenommen wird, wobei das erste Schalenelement (8A) und das zweite Schalenelement (8B) eine Dicke besitzen, die kleiner als die Höhe jedes Stegs (7A, 7B; 7A', 7B') ist, und wobei der Schritt des Abdeckens der Ummantelung nach dem Schritt des Aufsteckens des ersten Schalenelements und des zweiten Schalenelements den Schritt des Abtragens des Abschnitts (17) jedes Stegs, der über die äußere Oberfläche des ersten Schalenelements (8A) und des zweiten Schalenelements (8B) vorsteht, umfasst, so dass die Schnittfläche (15) jedes Stegs (7A, 7B; 7A', 7B') dann mit diesen äußeren Oberflächen bündig ist.

13. Verfahren nach Anspruch 12, **dadurch gekennzeichnet, dass** die in dem Schritt des Aufgießens einer Ummantelung verwendete Form so beschaffen ist, dass zwei ähnliche radial vorstehende Stege (7A, 7B; 7A', 7B') erhalten werden; und dass im Schritt des Aufsteckens wenigstens eines ersten Schalenelements und eines zweiten Schalenelements auf die Ummantelung ein erster Steg (7A; 7A') zwischen einer ersten Schnittfläche (9) des ersten Schalenelements (8A) und einer ersten Schnittfläche (11) des zweiten Schalenelements (8B) sandwichartig aufgenommen wird, während ein zweiter Steg (7B; 7B') zwischen einer zweiten Schnittfläche (10) des ersten Schalenelements (8A) und einer zweiten Schnittfläche (12) des zweiten Schalenelements (8B) sandwichartig aufgenommen wird.

14. Verfahren nach einem der Ansprüche 12 oder 13, **dadurch gekennzeichnet, dass** jeder Steg (7A, 7B; 7A', 7B') entlang der Schließebene der Form verwirklicht ist.

15. Verfahren nach einem der Ansprüche 12 bis 14, **dadurch gekennzeichnet, dass** jeder Steg (7A, 7B; 7A', 7B') eine Dicke im Bereich von 3 bis 5 mm hat.

16. Verfahren nach einem der Ansprüche 12 bis 15, **dadurch gekennzeichnet, dass** jeder Steg (7A, 7B; 7A', 7B') eine konstante Dicke besitzt.

17. Verfahren nach einem der Ansprüche 12 bis 16, **dadurch gekennzeichnet, dass** die Ummantelung (6; 6') aus einem Material besteht, das so beschaffen ist, dass es nach dem Abtragen einer vorgegebenen Dicke eine verhältnismäßig glatte Oberfläche aufweist.

18. Verfahren nach einem der Ansprüche 12 bis 17, **dadurch gekennzeichnet, dass** die Ummantelung (6; 6') aus einem verhältnismäßig starren Polyurethanschaum besteht.
